# EUROPEAN PATENT APPLICATION

(11) **EP 3 399 172 A1**
(43) Date of publication of application: **07.11.2018**
(21) Application number: 16881664.3
(22) Date of filing: 20.12.2016
(51) Int. Cl.: F02D 23/00, F02B 37/00, F02B 37/12, F02B 37/16, F02D 29/02, F02D 41/08, F02M 21/02

(54) **GAS ENGINE SYSTEM**

(30) Priority: 28.12.2015 JP 2015256000
(71) Applicant: Kawasaki Jukogyo Kabushiki Kaisha, Kobe-shi, Hyogo 650-8670 (JP)
(72) Inventor: HIRAYAMA, Towa, Kobe-shi, Hyogo 650-8670 (JP); IWASAKI, Hidekazu, Kobe-shi, Hyogo 650-8670 (JP); ISHII, Hiroyoshi, Kobe-shi, Hyogo 650-8670 (JP); NONAKA, Yosuke, Kobe-shi, Hyogo 650-8670 (JP); KIZUKA, Tomoaki, Kobe-shi, Hyogo 650-8670 (JP); FUJIHARA, Shigeharu, Kobe-shi, Hyogo 650-8670 (JP); FUKAO, Satoru, Kobe-shi, Hyogo 650-8670 (JP)
(74) Representative: Dehns
(86) International application number: PCT/JP2016/087872
(87) International publication number: WO 2017/115689

(57) **Abstract**

A gas engine system includes: a gas engine including a plurality of cylinders; a turbocharger including a compressor and a turbine, the compressor being connected to the plurality of cylinders by an intake passage, the turbine being connected to the plurality of cylinders by an exhaust passage; a throttle valve provided on the intake passage; a bleed valve provided on a branch passage that branches off from the intake passage; and a controller that controls the throttle valve and the bleed valve. The controller determines whether or not an idling condition is satisfied. The controller: when the idling condition is satisfied, fully closes the bleed valve and controls the throttle valve such that an intake pressure, which is a pressure of air supplied to the plurality of cylinders, is a negative pressure; and when the idling condition is not satisfied, keeps an opening degree of the throttle valve to a predetermined opening degree, and controls the bleed valve such that the intake pressure is a target pressure.

## Description

### Technical Field

The present invention relates to a gas engine system including a gas engine.

### Background Art

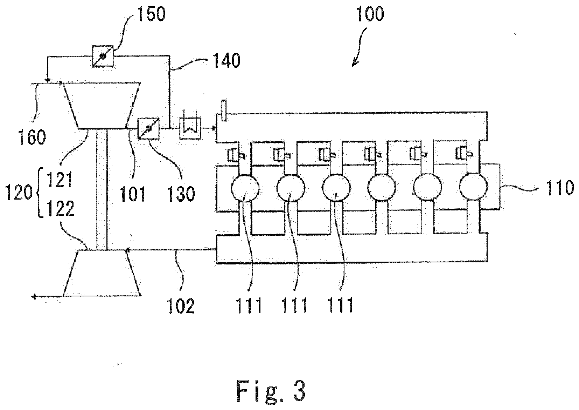

Generally speaking, Otto-cycle gas engines are operated under lean-bum conditions. Also, a gas engine is often used with a turbocharger. For example, Patent Literature 1 discloses a gas engine system 100 including a turbocharger 120 and a gas engine 110 as shown in Fig. 3.

Specifically, a plurality of cylinders 111 of the gas engine 110 are connected to a compressor 121 of the turbocharger 120 by an intake passage 101, and are connected to a turbine 122 of the turbocharger 120 by an exhaust passage 102. The intake passage 101 is provided with a throttle valve 130. A circulation passage 140 branches off from the intake passage 101 at a position downstream of the throttle valve 130, and the circulation passage 140 is connected to a suction passage 160, which leads air to the compressor 121. The circulation passage 140 is provided with a circulation valve 150.

In the gas engine system 100, when the engine load is in a low load range, opening degree control of the throttle valve 130 is performed. On the other hand, when the engine load is in a middle/high load range, the opening degree of the throttle valve 130 is set to a predetermined opening degree, and opening degree control of the circulation valve 150 is performed.

### Citation List

### Patent Literature

PTL 1: Japanese Laid-Open Patent Application Publication No. 2015-161201

### Summary of Invention

### Technical Problem

Each of the aforementioned terms "low load range" and "middle/high load range" is considered to indicate a state where the gas engine is performing work. During idling, in which the gas engine performs no work (e.g., while a clutch interposed between the output shaft of the gas engine and a driven body is disengaged), the turbocharger barely functions, and the intake pressure to the gas engine becomes substantially the atmospheric pressure. However, the inventors of the present invention have found, as a result of diligent studies, that when the intake pressure becomes substantially the atmospheric pressure during idling, an air-fuel mixture of a fuel gas and air becomes too lean. When the air-fuel mixture becomes too lean, the combustion becomes unstable, and as a result, the fuel gas that is uncombusted is discharged.

In view of the above, an object of the present invention is to provide a gas engine system capable of preventing an air-fuel mixture from becoming too lean during idling.

### Solution to Problem

In order to solve the above-described problems, a gas engine system according to the present invention includes: a gas engine including a plurality of cylinders; a turbocharger including a compressor and a turbine, the compressor being connected to the plurality of cylinders by an intake passage, the turbine being connected to the plurality of cylinders by an exhaust passage; a throttle valve provided on the intake passage; a bleed valve provided on a branch passage that branches off from the intake passage; and a controller that controls the throttle valve and the bleed valve. The controller determines whether or not an idling condition is satisfied. The controller: when the idling condition is satisfied, fully closes the bleed valve and controls the throttle valve such that an intake pressure, which is a pressure of air supplied to the plurality of cylinders, is a negative pressure; and when the idling condition is not satisfied, keeps an opening degree of the throttle valve to a predetermined opening degree, and controls the bleed valve such that the intake pressure is a target pressure.

According to the above configuration, when the idling condition is not satisfied (i.e., during normal operation), the intake pressure can be adjusted by using the bleed valve. Accordingly, surging is less likely to occur compared to a case where the intake pressure is adjusted by the throttle valve, and intake pressure responsiveness can be made high. On the other hand, when the idling condition is satisfied (i.e., during idling), the intake pressure to the gas engine is adjusted to be a negative pressure. Accordingly, the amount of air introduced into each cylinder is reduced. This makes it possible to prevent an air-fuel mixture from becoming too lean during idling. Moreover, since the bleed valve is fully closed during idling, air can be prevented from flowing into the intake passage in the negative-pressure state through the branch passage.

The gas engine may include a plurality of fuel injection valves corresponding to the plurality of cylinders, respectively, and the branch passage may branch off from the intake passage at a position upstream of the plurality of fuel injection valves. According to this configuration, in a case where the branch passage releases part of intake air to the atmosphere, there is no risk of the fuel being discharged to the outside. This is advantageous in terms of fuel efficiency.

The above gas engine system may further include an air cooler provided on the intake passage. The branch passage may branch off from the intake passage at a position downstream of the air cooler, and may release part of intake air flowing through the intake passage to an atmosphere. According to this configuration, part of the intake air, the temperature of which has become low, can be released to the atmosphere.

### Advantageous Effects of Invention

The present invention makes it possible to prevent the air-fuel mixture from becoming too lean during idling.

### Brief Description of Drawings

Fig. 1 shows a schematic configuration of a gas engine system according to one embodiment of the present invention.
Fig. 2 shows a schematic configuration of a gas engine system according to one variation.
Fig. 3 shows a schematic configuration of a conventional gas engine system.

### Description of Embodiments

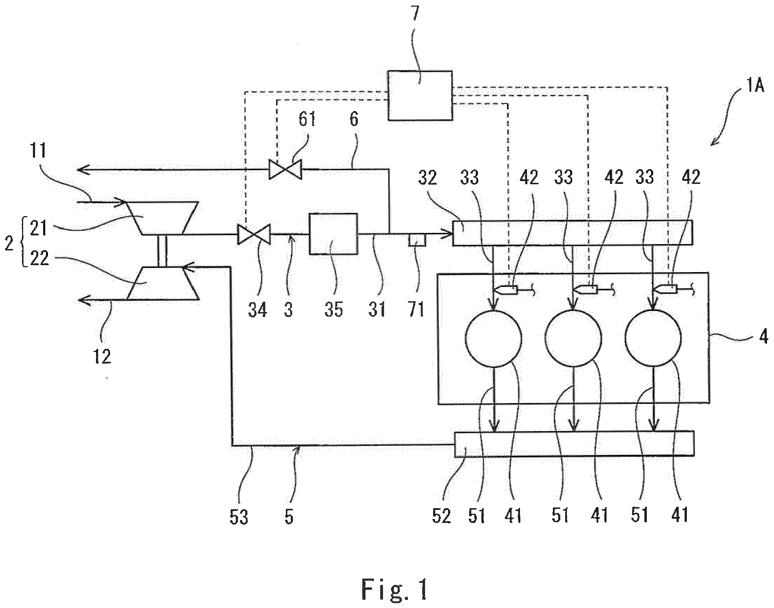

Fig. 1 shows a gas engine system 1A according to one embodiment of the present invention. The system 1A includes an Otto-cycle gas engine 4, a turbocharger 2, and a controller 7.

The gas engine 4 may be a pure gas engine that combusts only a fuel gas (e.g., natural gas), or may be a dual fuel engine that combusts one of or both a fuel gas and a fuel oil. In this case, when the gas engine 4 combusts a fuel oil, the cycle of the gas engine 4 may be a diesel cycle. In the present embodiment, the gas engine 4 is a 4-stroke engine. However, as an alternative, the gas engine 4 may be a 2-stroke engine.

For example, the gas engine 4 is used as a main engine of a ship. In this case, the gas engine 4 may directly drive a screw propeller to rotate, or may drive the screw propeller to rotate via a power generator and a motor. Alternatively, the gas engine 4 may be incorporated in power generating equipment installed on the ground.

The gas engine 4 includes a plurality of cylinders 41. The number of cylinders 41 is 5 to 18, for example (Fig. 1 shows only three cylinders 41 for the purpose of simplifying the drawing). The gas engine 4 is provided with a plurality of fuel injection valves 42 corresponding to the plurality of cylinders 41, respectively. Each fuel injection valve 42 injects a fuel gas into air supplied to the corresponding cylinder 41, thereby generating an air-fuel mixture of the fuel gas and the air. The air-fuel mixture is ignited in the cylinder 41, and thus combusted.

The turbocharger 2 includes a compressor 21 and a turbine 22. The compressor 21 is connected to the cylinders 41 by an intake passage 3, and the turbine 22 is connected to the cylinders 41 by an exhaust passage 5. Air from the outside of the system is led to the compressor 21 through a suction passage 11, and exhaust gas from the turbine 22 is led to the outside of the system through an exhaust passage 12.

To be more specific, the intake passage 3 includes: an intake manifold 32; a main passage 31, which connects the intake manifold 32 and the compressor 21; and a plurality of branch passages 33, which connect the intake manifold 32 and the cylinders 41. The exhaust passage 5 includes: an exhaust manifold 52; a plurality of branch passages 51, which connect the cylinders 41 and the exhaust manifold 52; and a main passage 53, which connects the exhaust manifold 52 and the turbine 22.

The main passage 31 of the intake passage 3 is provided with a throttle valve 34 and an air cooler 35, such that the throttle valve 34 and the air cooler 35 are arranged in this order from the upstream side. The main passage 31 is provided with a pressure sensor 71, which detects the intake pressure to the gas engine 4 (the pressure of air supplied to the cylinders 41). The pressure sensor 71 is positioned downstream of a branching position of a branch passage 6 described below.

The branch passage 6 branches off from the main passage 31 of the intake passage 3. The branch passage 6 serves to release compressed air compressed by the compressor 21 from the intake passage 3. In the present embodiment, the branch passage 6 branches off from the main passage 31 at a position downstream of the air cooler 35. The distal end (downstream end) of the branch passage 6 is open to the atmosphere. That is, the branch passage 6 releases part of intake air flowing through the main passage 31 of the intake passage 3 to the atmosphere. The branch passage 6 is provided with a bleed valve 61.

The above-described fuel injection valves 42, the throttle valve 34, and the bleed valve 61 are controlled by the controller 7. For the control of the fuel injection valves 42, the controller 7 starts/ends the injection of the fuel gas from each fuel injection valve 42 at predetermined timings based on the crank angle of the gas engine 4.

For the control of the throttle valve 34 and the bleed valve 61, the controller 7 first determines whether or not an idling condition is satisfied. For example, the idling condition is at least one of the conditions (A) and (B) indicated below.
Condition (A): the flow rate in a fuel gas supply passage (not shown) that leads the fuel gas to all the fuel injection valves 42 is less than a predetermined flow rate.
Condition (B): A torque detected by a torque meter provided on the output shaft of the gas engine 4 is less than a predetermined torque.

In a case where the gas engine 4 is coupled to a power generator, an actual output from the gas engine 4 can be calculated based on electric power generated by the power generator. Therefore, in this case, the condition (C) indicated below may be adopted instead of the above condition (B).
Condition (C): An actual output from the gas engine 4, which is calculated based on electric power generated by the power generator, is less than a predetermined output.

When the idling condition is not satisfied, i.e., during normal operation, the controller 7 keeps the opening degree of the throttle valve 34 to a predetermined opening degree. The predetermined opening degree is desirably not less than 75%, and more desirably, not less than 90%. For example, the predetermined opening degree may be 100% (i.e., the throttle valve 34 being fully open). Meanwhile, the controller 7 controls the bleed valve 61 such that the intake pressure detected by the pressure sensor 71 is a required pressure of the gas engine 4. That is, the flow rate of air released from the intake passage 3 through the branch passage 6 is adjusted by the opening degree of the bleed valve 61.

On the other hand, when the idling condition is satisfied, i.e., during idling, the controller 7 fully closes the bleed valve 61, and controls the throttle valve 34 such that the intake pressure to the gas engine 4 is a negative pressure. For example, the controller 7 changes the opening degree of the throttle valve 34 to such a preset opening degree that the intake pressure to the gas engine 4 is a negative pressure.

In the above-described control, when the idling condition is not satisfied (i.e., during normal operation), the intake pressure can be adjusted by using the bleed valve 61. Accordingly, surging is less likely to occur compared to a case where the intake pressure is adjusted by the throttle valve 34, and intake pressure responsiveness can be made high. On the other hand, when the idling condition is satisfied (i.e., during idling), the intake pressure to the gas engine 4 is adjusted to be a negative pressure. Accordingly, the amount of air introduced into each cylinder 41 is reduced. This makes it possible to prevent the air-fuel mixture from becoming too lean during idling. Moreover, since the bleed valve 61 is fully closed during idling, air can be prevented from flowing into the intake passage 3 in the negative-pressure state through the branch passage 6.

Furthermore, the branch passage 6 branches off from the intake passage 3 at a position upstream of the fuel injection valves 42. Therefore, in a case where the branch passage 6 releases part of the intake air to the atmosphere as in the present embodiment, there is no risk of the fuel being discharged to the outside. This is advantageous in terms of fuel efficiency.

### (Variations)

The present invention is not limited to the above-described embodiment. Various modifications can be made without departing from the spirit of the present invention.

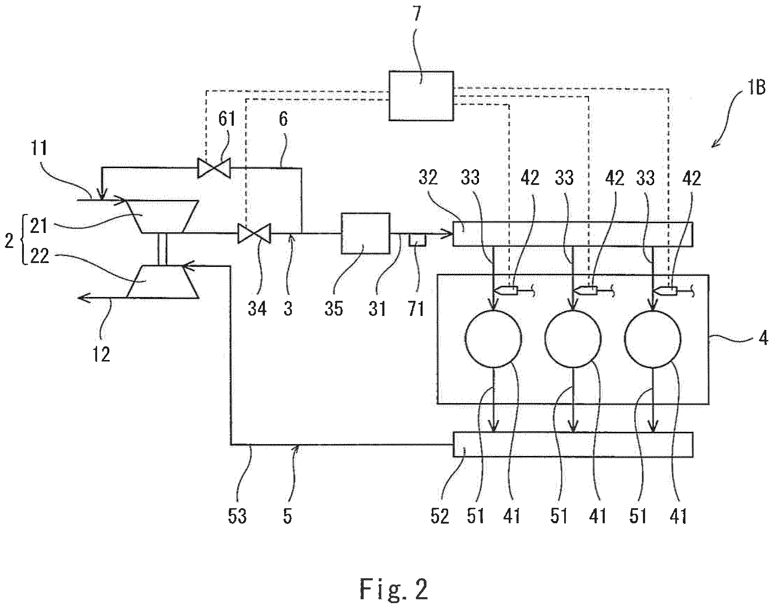

For example, as in a gas engine system 1B according to one variation shown in Fig. 2, the distal end (downstream end) of the branch passage 6 may be connected to the suction passage 11. In this case, the branch passage 6 may branch off from the main passage 31 of the intake passage 3 at a position upstream of the air cooler 35. However, if the branch passage 6 branches off from the main passage 31 of the intake passage 3 at a position downstream of the air cooler 35 and the distal end of the branch passage 6 is open to the atmosphere as in the above-described embodiment, part of the intake air, the temperature of which has become low, can be released to the atmosphere. In addition, in the case where the branch passage 6 branches off from the main passage 31 of the intake passage 3 at a position upstream of the air cooler 35, it is necessary to use, as the bleed valve 61, a valve that is capable of bearing the discharge temperature of the compressor 21, which is a high-temperature (e.g., 200°C). However, if the branch passage 6 branches off from the main passage 31 of the intake passage 3 at a position downstream of the air cooler 35, an inexpensive valve can be used as the bleed valve 61.

### Reference Signs List

- 1A, 1B: gas engine system
- 2: turbocharger
- 21: compressor
- 22: turbine
- 3: intake passage
- 34: throttle valve
- 35: air cooler
- 4: gas engine
- 41: cylinder
- 42: fuel injection valve
- 5: exhaust passage
- 6: branch passage
- 61: bleed valve
- 7: controller

## Claims

1. A gas engine system comprising:
a gas engine including a plurality of cylinders;
a turbocharger including a compressor and a turbine, the compressor being connected to the plurality of cylinders by an intake passage, the turbine being connected to the plurality of cylinders by an exhaust passage;
a throttle valve provided on the intake passage;
a bleed valve provided on a branch passage that branches off from the intake passage; and
a controller that controls the throttle valve and the bleed valve, wherein
the controller determines whether or not an idling condition is satisfied, and
the controller:
when the idling condition is satisfied, fully closes the bleed valve and controls the throttle valve such that an intake pressure, which is a pressure of air supplied to the plurality of cylinders, is a negative pressure; and
when the idling condition is not satisfied, keeps an opening degree of the throttle valve to a predetermined opening degree, and controls the bleed valve such that the intake pressure is a target pressure.

2. The gas engine system according to claim 1, wherein
the gas engine includes a plurality of fuel injection valves corresponding to the plurality of cylinders, respectively, and
the branch passage branches off from the intake passage at a position upstream of the plurality of fuel injection valves.

3. The gas engine system according to claim 1 or 2, further comprising an air cooler provided on the intake passage, wherein
the branch passage branches off from the intake passage at a position downstream of the air cooler, and releases part of intake air flowing through the intake passage to an atmosphere.
